Europäisches Patentamt

European Patent Office

Office européen des brevets

(19)

(11) Publication number: **0 010 449**
**B1**

(12) **EUROPEAN PATENT SPECIFICATION**

(45) Date of publication of patent specification: **25.05.83**

(21) Application number: **79302307.8**

(22) Date of filing: **23.10.79**

(51) Int. Cl.³: **H 02 J 7/14, H 02 J 7/24, G 06 F 15/46, G 08 B 21/00**

(54) A method of and apparatus for charging a vehicle battery.

(30) Priority: **24.10.78 JP 131146/78**

(43) Date of publication of application:
**30.04.80 Bulletin 80/9**

(45) Publication of the grant of the patent:
**25.05.83 Bulletin 83/21**

(84) Designated Contracting States:
**DE FR GB**

(56) References cited:
**DE - A - 2 104 833**
**DE - A - 2 413 818**
**DE - B - 1 563 619**
**FR - A - 1 230 617**
**US - A - 3 496 447**
**US - A - 3 895 284**

(73) Proprietor: **NIPPONDENSO CO., LTD.**
**1, 1-chome Showa-cho**
**Kariya-shi Aichi-ken (JP)**

(72) Inventor: **Kazumasa, Mori**
**13-12 Aza Kamiimaike, Oaza Morioka**
**Higashiura-cho, Chita-gun, Aichi-ken (JP)**
Inventor: **Tetsuo, Kato**
**1-55, Kanori, Himeogawa-cho**
**Anjyo-shi, Aichi-ken (JP)**
Inventor: **Katsuya, Muto**
**41-1, Kamisawatari, Ogakie-cho**
**Kariya-shi, Aichi-ken (JP)**
Inventor: **Etsushi, Miura**
**11-1, Minamibaba, Terazu-cho**
**Nishio-shi, Aichi-ken (JP)**

(74) Representative: **Hartley, David et al,**
**c/o Withers & Rogers 4 Dyer's Buildings Holborn**
**London, EC1N 2JT (GB)**

Courier Press, Leamington Spa, England.

A method of and apparatus for charging a vehicle battery

The present invention relates to a method of and apparatus for charging a vehicle battery in which the actual charging voltage produced by a generator connected for charging the battery is detected and compared with a reference voltage value derived as a predetermined function of the operating condition of the battery and operation of the generator is controlled to adjust the battery charging voltage to the said reference value.

In conventional voltage regulating systems, the generator voltage is simply regulated in accordance with a reference voltage with temperature compensation by a thermistor. There is therefore a risk that the charging voltage will be reduced on account of an external load to an inacceptable level; certainly, the degree to which the battery is charged changes with the external load. Unless charging conditions are optimum, the life of the battery will be reduced.

Some attempts have been made to overcome these disadvantages. In DE—A—2104833 an apparatus for charging a vehicle battery is disclosed in which a reference voltage is derived as a predetermined function of the battery temperature. This reference voltage is compared with the charging voltage to control the operation of the generator so that the charging voltage corresponds to the reference voltage. Regulating systems in which the charging of a vehicle battery is dependent on the battery charging condition and the electrical load are known from FR—A—1 230 617 and DE—B—15 63 619 respectively.

It is an object of this invention to provide a further improved method of charging a vehicle battery. According to the invention such improvement is achieved by detecting the temperature of the battery electrolyte, the specific gravity of the electrolyte, and the electrical load on the battery, and increasing the reference voltage value in accordance with an increase in the detected load and with decreases in the detected temperature and the detected specific gravity.

Preferably, the reference voltage value is calculated by means of an electronic data processing device such as a micro-computer, which compares the battery charging voltage with the reference voltage and automatically regulates the field excitation of the generator in response to the comparison. The computer may be programmed to perform calculations in accordance with the desired functional relationships and based on the measured values of the temperature and battery charging condition (e.g. electrolyte specific gravity) or may store a range of intermediate values from which the appropriate values are selected depending upon the measured temperature and specific gravity, the reference value then being derived from the intermediate values by adding a constant value determined by the load condition.

Embodiments of the present invention will now be described by way of example with reference to the accompanying drawings.

Figure 1 is a block diagram of a voltage regulating system for a vehicle generator.

Figure 2 is a flow chart illustrating operation of the micro-computer in the system of Figure 1.

Figure 3 is a graph showing the relationship between the temperature T, specific gravity S and regulated voltage V, for various electrical loads.

Figure 4 is a flow chart illustrating the operation of another embodiment of the present invention, and

Figure 5 is an electric circuit diagram of a first voltage sensor shown in Figure 1.

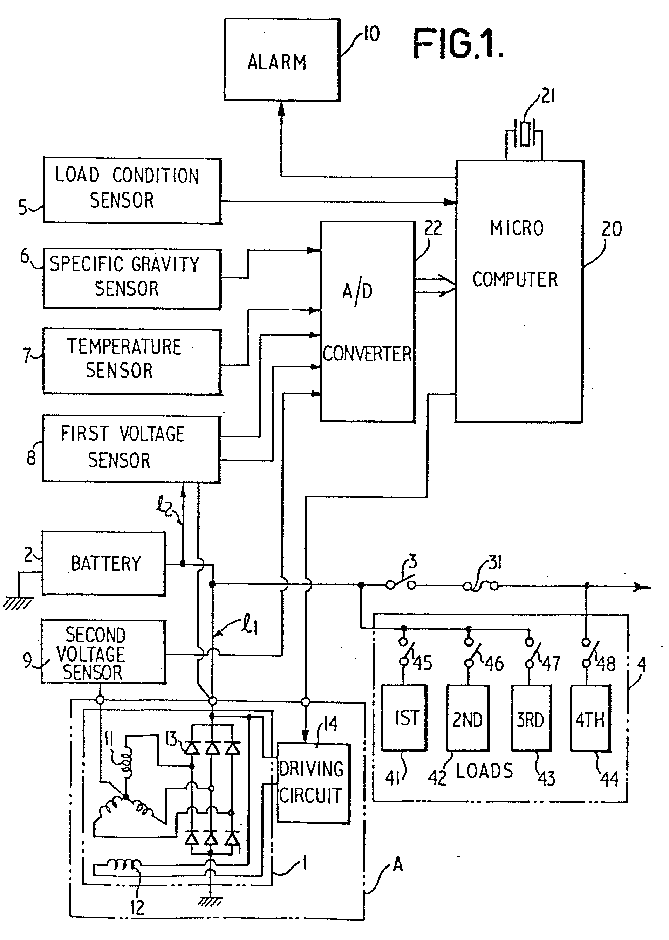

The block A shown in Figure 1 is mounted in the engine compartment of a vehicle. A star-connected-three-phase alternator driven by the vehicle engine, comprises armature windings 11, a field exciting coil 12 and full-wave rectifier 13 for rectifying three phase a.c. current generated by the Y-connected windings.

A driving unit 14 for controlling the energization of the field coil in accordance with signals described later, consists of a power transistor and a control element for driving the power transistor in response to its input signals and is mounted on the alternator case or housing indicated at A.

A vehicle mounted battery 2 is connected to and charged by the alternator 1 for energizing various electrical loads at 12 volts. The supply to the loads is controlled via an ignition or accessory switch 3 disposed in the passenger compartment of the vehicle, the loads being protected against excessive currents (e.g. resulting from a short circuit) by a fuse 31. The vehicle electrical load indicated at 4 includes three loads, 41, 42 and 43 connected respectively via switches 45, 46 and 47, to the battery 2 and a fourth load 44 connected to the same battery 2 via switch 48 and ignition switch 3.

Examples of the loads 41, 42 and 43 are side lights (typically 8w×4), small lamps (typically 8w×4), dipped lower head light beams (typically 50w×2), fuller upper beams thereof (typically 75w×2) and stop lights (typically 23w×2). The fourth load may be a starter motor (typically 800w), the windshield wiper motor (about 30w), indicator lamps (about 57w in total) and window operating driving motors (about 60w).

A sensor 5 generates a signal indicative of the load condition, for example, a signal SW1 when the head lights are dipped and a signal SW2 when the head lights are on full beam.

The sensor detects a voltage across resistors of high resistance each of which is connected in parallel with both head lights or, when the vehicle has four headlights with separate upper and lower beams, a photosensitive element disposed adjacent the head lights, is used to generate the signal.

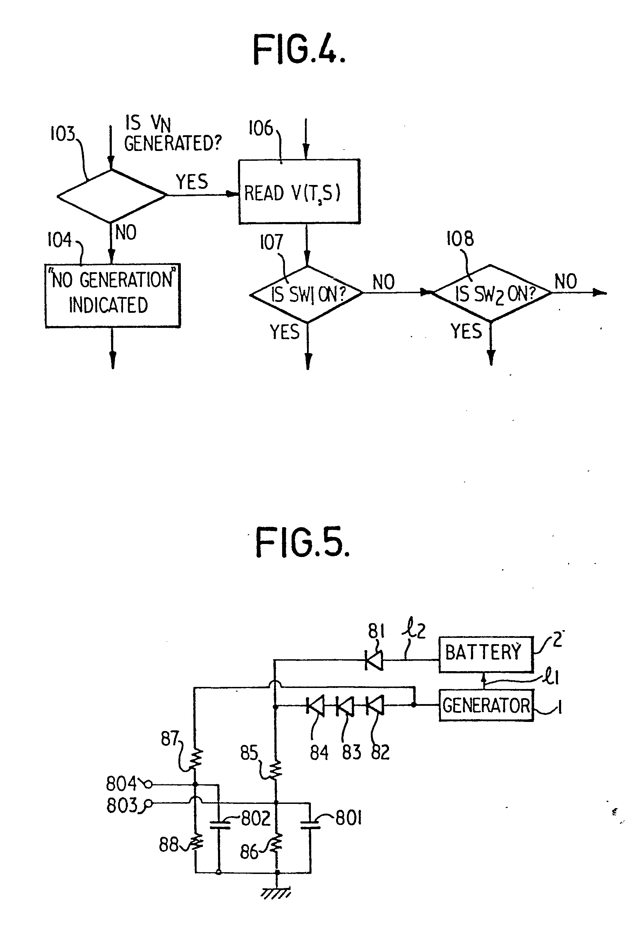

A specific gravity sensor 6, such as a conventional float sensor disposed within the battery, generates a continuous or intermittent signal S when the specific gravity of the battery electrolyte liquid is in the range 1.18 to 1.30. A temperature sensor consisting of thermistor or temperature sensitive transistors is disposed in the battery electrolyte liquid or battery case, produces a signal T indicating the temperature of the electrolyte liquid or electrode plate which is related to the battery charging characteristics. A first voltage sensor 8 having inputs connected to the battery 2 charging voltage and the generator 1 output voltage, generates a battery charging voltage signal Vx as a first output signal during normal operation and an output voltage Vy when electric power supply line 1, or voltage detecting lead wire 12 is disconnected or in the event of some other discontinuity. The generator output signal Vy is continuous. An example of the first voltage sensor 8 is shown in Figure 5, which comprises a diode 81, a plurality of diodes 82, 83 and 84 for compensating voltage drop of the power supply line 11, voltage dividing resistors 95, 86, 87, and 88 and smoothing capacitors 801 and 802. The first and second output signals appear respectively on terminals 803 and 804. If only the disconnection of the power supply line 11 or voltage detecting lead wire 12 is to be detected, resistors 87 and 88 and capacitor 802 are not needed. A second voltage sensor 9 determines whether the generator 1 operates normally or not by detecting whether or not the neutral point voltage attains a predetermined value. When operation is normal a neutral voltage signal Vn is generated. However, the engine speed or a signal from one of the armature windings is also available instead. To indicate an excessive voltage an alarm 10 is trippered, by an electronic data processing unit comprising a micro-computer 20 which executes digital operation of software in accordance with a quartz oscillator 21 of several MHZ and supplied with 5 volts stabilized voltage to control the alarm 10 and driving unit 14 in response to signals from the sensors 5 to 9.

This micro-computer 20 is a one-chip-type large scale integrated circuit (LSI) comprising a read only memory (ROM) for storing the control programme which determines each step to enable optimum operation of the alarm 10 and driving unit 14, a central processing unit (CPU) for executing the control programmes which are successively read from the ROM, a random access memory (RAM) for temporarily storing operational data and enabling the CPU to read its data, a clock pulse generator and an input-output circuit (I/O circuit) including a latch circuit.

Analogue-Digital converter 22 converts analogue signals from the specific gravity sensors 6, temperature sensor 7, first voltage sensor 8, and second voltage sensor 9, to digital signals, its outputs being applied to the micro-computer.

In this embodiment, operation of the micro-computer occurs in a predetermined constant period. When energization of the field exciting coil 12 is controlled in response to result of the operation process, various factors including the capacity of the generator, the field exciting coil 12 and its response time, capacity of the battery and the response time of control circuits should be taken into account for setting the said period. If, for example, the period is comparatively long, longer than 25 milli-seconds for example, voltage variations caused by ripple voltage components in the regulated voltage increase so that brightness of the vehicle lamps may fluctuate. On the other hand, if the period is set too short, the average field exciting current may be decreased due to the inductance of the field exciting coil with the result that insufficient output power is available in the low speed range. With this in mind the period of operation of the preferred embodiment is set in the range 0.5 to 5 milli-seconds.

The temperature T/regulated voltage V characteristic is generally set by means of a semi-conductor element, to have a negative slope of, for example, 0.002 v 0.012 V/C, in consideration of the range allowed with respect to temperature-charging voltage characteristics and electric loads. The characteristic curve of specific gravity against reference voltage V has extremely small negative gradient relative to the specific gravity to prevent gas generation from the battery due to an overcharging. (The specific gravity is one indicator of the battery charging condition and furthermore, this indication is independent of temperature changes). When the battery is not fully charged the reference voltage is set comparatively high and when the battery is almost fully charged, the reference voltage is made comparatively low. Further, the heavier the load (LO, L1 and 12) the higher the reference voltage needs to be, so as to increase frequency of excitation thereby increasing generator output to avoid a reduction in the battery charging voltage Vx.

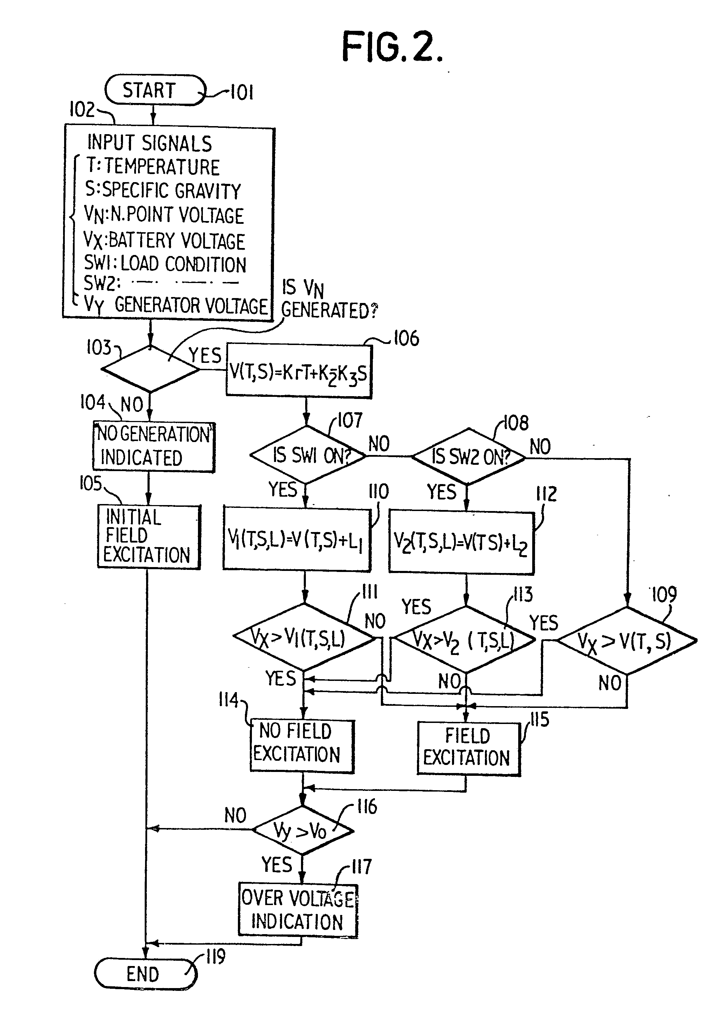

Referring now to the flow chart of Figure 2, which illustrates operation of the alarm 10 in response to the control programme of the micro-computer and regulation of the generator 1, when the key switch 3 is closed, a voltage stabilizing circuit (not shown) supplies the micro-computer 2 with a stabilized voltage of 5 volts to energize the micro-computer and initiate the operating sequence which steps on, in a predetermined period of 0.5 to 5 milli-seconds, from step 101 "START" to step 102 "INPUT SIGNALS" 102.

In this state load signals SW and SW2 are obtained from the load sensor 4, specific gravity signals 5 from the specific gravity sensor 6, temperature signals T from the temperature sensor 7, battery charging voltage signals Vx and generator output voltage Vy signals from the first voltage sensor S and neutral voltage signals Vn are sensed by the second voltage sensor 9. All of these signals are stored by the RAM before proceeding to the discrimination step 103 which determines, whether the generator driven by the vehicle engine is in operation or not, this being indicated by the stored neutral voltage signals. When the engine stops or the generator fails, the neutral voltage is not generated and no neutral voltage signal Vn appears, so that the result of the discrimination step becomes "NO", followed by the step of "NO GENERATION" 104. On the other hand, when the generator is in operation, the neutral voltage signal Vn is present and the positive ("YES") result of the discrimination 103 steps on to the regulated voltage calculation step 106. Before the engine is started, the "NO GENERATION" indicating step 104 follows and the micro-computer 20 latches the signal to operate the alarm 10 at its I/O circuit until another command signal is generated, indicated by the content of the ROM, whereby the alarm 10 which may be a visual alarm, is activated to warn an operator of no-generation of the generator 1.

At step 105, initial field excitation of the generator is achieved by means of a driving circuit 14 for energizing the field coils 12 in response to initial field exciting signals having a constant frequency and produced by the micro-computer for a unit operation period in accordance with the indication of the ROM before the end of the unit operation process cycle in the following step 119. The field circuit is switched on and off at a predetermined frequency to cause the initial field excitation without the need for current limiting resistor to limit the average field exciting current to a desired value (for example 300m A maximum). As stated above, the routine comprising the steps 101, 102, 103, 104, 105 and 119 is repeated when the key switch is closed until the engine is started a "NO GENERATION" warning is given by the alarm 10 with the initial field excitation being made.

When the generator 1 starts, a neutral voltage is generated and, consequently, the first voltage sensor 8 generates a neutral voltage signal Vn and the positive result of the step 103 initiates the regulated voltage calculation step 106. The first regulated voltage V (T, S) is given from the following equation as a function of the temperature signal T, specific gravity signal S stored in the input signal step 102, and predetermined proportional constants K1 and K2 determined respectively from the desired temperature-regulated voltage characteristic and the specific gravity-regulated voltages characteristic.

$$V(T, S) = -K1 \cdot T + K2 - K3 \cdot S \ldots (1)$$

After derivation of the first voltage V (T, S) the step 106 is followed by a first load condition discrimination step 107 in which the result is "YES" if the first load condition signal SW corresponding to the dipped head lights beams is generated and the second voltage derivation step 110 follows. On the other hand in the presence of the second load condition signal SW2 corresponding to the main head lights beams the result if "NO" producing a positive "YES" result in the second load condition discrimination step 108, the third voltage derivation step 112 will follow. A negative result in step 108 on the other hand, initiates discrimination step 109.

During daytime the head lights are not necessary and, therefore, neither the first nor the second load condition signal SW1 or SW2 is generated. Accordingly, the sequence begins at step 101 and proceeds through the steps 102, 103, 106, 107, 108 to the voltage discrimination step 109. In this discrimination step 109, the battery charging voltage signal Vx stored in the "INPUT SIGNAL" step 102 and the first voltage V (T, S) obtained in the step 106 are subtracted to produce a difference signal which may or may not be greater than zero.

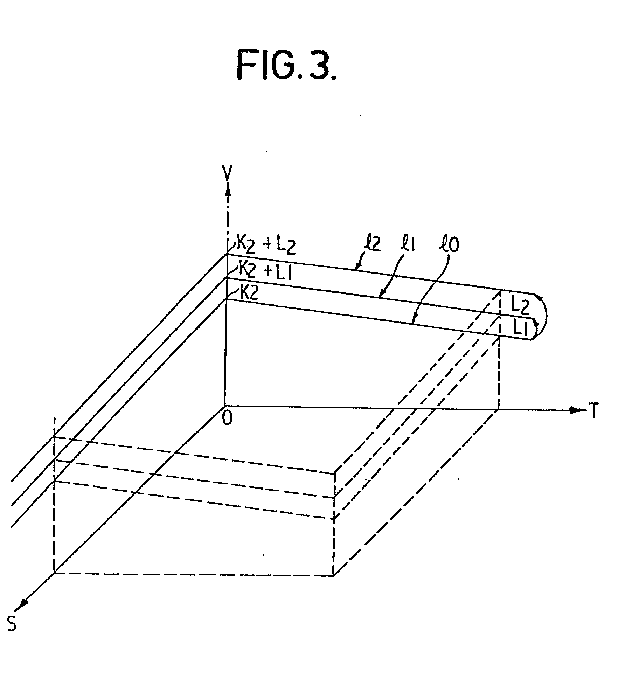

If the result of discrimination step 109 is "NO", that is if the battery charging voltage Vx is lower than a desired first voltage V (T, S), the process will proceed to the "FIELD EXCITATION" step 115, in which, in accordance with the ROM, the I/O circuit latches the signal to drive the field exciting coil 12 until another command signal is generated in the next succeeding cycle of operations to energize the field exciting coil 12 through the driving circuit 14, thereby increasing the generator output power. On the other hand, if the result of the voltage discrimination step 109, is "YES" that is, if the battery charging voltage Vx is greater than the desired first voltage V (T, S), the "NO FIELD EXCITATION" step 114 will follow. In this case the I/O circuit latches the signal to stop energization of the field exciting coil 12 until another command signal is generated in the next succeeding operating cycle, so lowering the output power of the generator. In the excess voltage discrimination step 116 the (stored) generator output voltage Vy and a voltage Vo indicative of a predetermined maximum allowable voltage, are compared so that when the generator output voltage Vy is higher than the allowable voltage Vo the positive "YES" result initiates the excess voltage indication step 117. The I/O circuit then latches the signal to energize and de-energize the alarm in accordance with the instruction of the ROM, whereby the alarm 10 flashes to warn the driver of the vehicle of the fact that the generator 1 output voltage Vy is excessive before the end step 119. Further, if the generator output voltage Vy in the voltage discrimination step 116 is lower than the allowable voltage Vo so producing, in step 116 a negative "NO" result, the "END" step will follow and a unit operation process cycle is completed. As stated above, when running of an automobile during the day time without using the head lights or without load condition signals SW, or SW2, the battery charging voltage Vx is controlled to become the predetermined regulated voltage V (T, S) by energizing or de-energizing the field coil of the generator to control generator output voltage, the desired voltage V (T, S) at this load Lo being determined as illustrated in Figure 3, by the temperature T and specific gravity S.

When the automobile is driven at night and the head lights are dipped, the first load condition signal SW1 is generated accordingly, as mentioned above the operating sequence progresses from the step 101 through the steps including 102, 103, 106 and 107 and to the second regulated voltage calculation step 110. In this step 110, the second voltage V1 (T, S, L) is derived in accordance with the following equation as a function of the first voltage V (T, S) and first correction value L, determined by the electrical load.

$$V1 \ (T, \ S, \ L) = V \ (T, \ S) + L1 \ \ldots (2)$$

In this the subsequent voltage discrimination step 111, the battery charging voltage signal Vx stored in step 102 and the second voltage V1 (T, S, L) derived in step 110 are compared to determine which of the voltages Vx or V1 (T, S, L) is the greater.

If the result of this discrimination step 111 is "NO" or Vx⩽V1 (T, S, L), the "FIELD EXCITATION" step follows, the field coil being energized to increase the generator output before proceeding to the "OVER VOLTAGE INDICATION" step. On the other hand if the result is "YES" or Vx>V1 (T, S, L) "NO EXCITATION" step follows so that the field coil is de-energized to decrease the generator output voltage. In the following excessive voltage discrimination step 116, the generator output voltage Vy temporarily stored in the above "input signals" step 102 and predetermined allowable voltage Vo are compared. If the comparison result is "YES" or Vy>Vo, "OVER VOLTAGE INDICATION" step follows to flash the alarm 10 until another command signal is generated in the subsequent operating sequence or cycle. On the other hand, if the result is "YES" or Vx>V1 (T, S, L) the sequence moves to the "NO FIELD EXCITATION" step 114 to de-energize the field coil so lowering the generator output voltage, and hence to over voltage discrimination step 116. The generator output voltage Vy temporarily stored in the above "INPUT SIGNALS" step and the predetermined allowable voltage Vo are compared. If the result is "YES" or Vy>Vo, the "OVER VOLTAGE INDICATION" step 116 follows to flash the alarm 10 until another command signal is generated in the next operating sequence or cycle before the "END" step.

When at night, the headlight beams are on full the second load condition signal SW2 is generated. Accordingly, the operating sequence progresses through the steps 101, 102, 103, 106, 107 and 108 and the third voltage derivation step 112. The third voltage is given by the following equation wherein V (T, S) is the first voltage obtained in the step 106 and a second predetermined voltage correction value L2.

$$V2 \ (T, \ S, \ L) = V \ (T, \ S) + L2 \ \ldots (3)$$

The voltage discrimination step 113 follows, wherein the battery charging voltage Vx and the third voltage V2 (T, S, L) are compared to determine whether their difference is greater than zero or not.

If the result is "NO" or Vx⩽V2 (T, S, L), the sequence moves to the "FIELD EXCITATION STEP" 115 before the over voltage discrimination step 116. On the other hand, if the result is "YES" or Vx>V2 (T, S, L), the "NO EXCITATION" step follows to de-energize the field coil. This in turn is followed by the over voltage discrimination 116 in which the generator output voltage Vy temporarily stored in the "INPUT SIGNALS" step 102 and the predetermined allowable voltage Vo are compared. If Vy>Vo, a "YES" signal is generated to initiate the OVER VOLTAGE INDICATION STEP 117, where the over voltage condition is indicated by the alarm 10 pending receipt of another command signal during the next operating sequence or cycle and the "END" step follows. On the other hand, when Vy⩽Vo, the negative result in the discrimination step 116 is followed by the "END" step 119 to complete a unit operating sequence cycle.

As stated above, when comparatively heavy loads such as headlights are applied a correction value L1 or L2 is added to the voltage V (T, S) (corresponding to LO in Figure 3), the desired voltage for a given load L1 or L2, being determined by the temperature signal T and specific gravity signal S. This voltage V (T, S, L) is compared with the battery charging voltage Vx and the field excitation of the generator 1 is controlled accordingly so that the battery charging voltage Vx approaches the desired value.

In the above embodiment, as the electrical load increases so does the desired voltage. As a result insufficient battery charging due to the heavy generator load is effectively avoided.

When either one of the normal power supply line 11 and normal voltage detecting line 12 is disconnected, the normal battery charging voltage is not obtained and a generator output voltage Vy is generated instead of the battery charging voltage Vx since diodes 82, 83 and 84 are conductive instead of the diode 81 as shown in Figure 5. Accordingly, the micro-computer 20 takes the generator output voltage signal Vy for the battery charging voltage signal Vx so that the operating sequence proceeds in accordance with the programme in which Vx=Vy, thereby controlling the generator output voltage within a predetermined value. When the first voltage sensor 8 is constructed as shown in Figure 5, the control voltage is slightly higher by an amount proportional to the difference between the voltage drop of the two diodes and that of the voltage supply line 11.

The above described sequence from the "START" step 101 to the "END" step 119 is completed within several tens or several hundreds of micro-seconds ($\mu$ sec), and the programmed control sequence is executed in a period of 0.5 m sec—5 m sec. In the remaining time, other operations such as an engine ignition timing, fuel injection and monitoring of abnormal operation of various parts, are executed.

The embodiment of Figure 4 differs from that of Figure 2 in that the voltage V (T, S) is not derived by calculation as a function of the voltage/temperature specific gravity characteristic, but by reading out a predetermined "map" or data corresponding to the basic load condition Lo in Figure 3 stored in the ROM incorporated in the micro-computer 20.

Other operations are the same as for the embodiment of Figure 2. Since this embodiment does not execute four arithmetic operations for the first regulated voltage as the step 106, the operation time of the control programme may be made shorter.

In the above embodiment, the temperature/voltage characteristic curve is linear and has a negative gradient. However, this relationship may be changed depending upon the conditions of use, environment, battery charging characteristics, and allowable voltage range of the vehicle electrical equipment.

In the above embodiment, the load sensor 5 generates the lead signals SW1, SW2 in response to the head lights being lit, by which signals SW1 and SW2 the regulated voltage is corrected. However, windshield wipers or other electrical devices may be included in the electric load sensed by the electric load condition sensor 5. In place of the load driving switch, the electrical load may be detected directly by detection by the load current which is representative of the load.

The battery electrolyte temperature may be detected from the electrode plate, battery body or its surroundings instead of the electrolyte itself.

## Claims

1. A method of charging a vehicle battery in which the actual charging voltage produced by a generator connected for charging the battery is detected and compared with a reference voltage value derived as a predetermined function of the operating condition of the battery and operation of the generator is controlled to adjust the battery charging voltage to the said reference value, characterised in that the temperature of electrolyte in the battery, the specific gravity of the electrolyte and the electrical load on the battery are detected, the reference voltage value being increased in accordance with an increase in the detected load and with decreases in the detected temperature and the detected specific gravity.

2. A method according to claim 1 characterised in that an alarm is actuated when the generator is not operating.

3. A method according to any one of claims 1 or 2, characterized in that the reference value is derived by a computer from a basic value selected from among a range of values stored within the computer, in response to the detected temperatures, specific gravity and electrical load.

4. A method according to any one of claims 1 to 3, characterised in that the reference value is calculated by means of a computer in response to the detected temperature, specific gravity and electrical load.

5. Apparatus for charging a vehicle battery comprising a voltage generator connected to the battery, detector means for producing a signal representative of the operating condition of the battery and means for deriving a reference voltage value which is a predetermined function of the detected battery operating parameter and controlling operation of the generator to adjust the battery charging voltage to the said reference voltage, characterised in that the detector means produces signals representative of the temperature of the electrolyte in the battery, the specific gravity of the electrolyte and the electrical load on the battery, the reference voltage being increased in accordance with an increase in the detected load and with a decrease in the detected temperature and the detected specific gravity.

6. Apparatus according to claim 5, characterised in that the said deriving and controlling means comprises a computer which is programmed to calculate the said reference value in response to the detected temperature, specific gravity and electrical load, to compare the reference value with the battery charging voltage and to adjust the battery charging voltage accordingly.

7. Apparatus according to claim 6 or claim 7, characterised in that the computer is arranged to actuate an alarm when the generator is not operating.

8. An apparatus for controlling a vehicle alternator used to charge a vehicle battery and having a field winding, star-connected armature windings for generating an alternating current voltage in accordance with the energization of the field winding and a rectifier circuit for rectifying the alternating current voltage to produce a direct current charging voltage, the apparatus being characterised by:

means for detecting a power supply condition from the vehicle battery to vehicle electric loads including vehicle head lamps;

means for detecting the temperature of hte battery;

means for detecting the specific gravity of electrolyte of the battery;

means for establishing a desired value of the charging voltage in accordance with the detected power supply condition, the detected temperature and the detected specific gravity, the desired value being increased in accordance with the increase in the detected power supply condition and with the decreases in the detected temperature and the detected specific gravity;

means for detecting an actual value of the charging voltage applied to the vehicle battery;

means for detecting a neutral point voltage of the star-connected armature windings;

means for comparing the detected neutral point voltage with a predetermined reference value;

means for energizing the field winding of the vehicle alternator at a fixed frequency when the output of the comparing means indicates that the detected neutral point voltage is smaller than the predetermined reference value; and

means for energizing the field winding of the vehicle alternator as long as the actual value of the charging voltage is smaller than the desired value of the charging voltage when the output of the comparing means indicates that the detected neutral point voltage is larger than the predetermined reference value.

**Patentansprüche**

1. Verfahren zum Laden einer Farhzeugbatterie, bei dem die tatsächliche Ladespannung, die von einem zum Laden der Batterie angeschlossenen Generator erzeugt wird, aufgenommen und mit einem Bezugsspannungswert verglichen wird, der als eine bestimmte Funktion des Betriebszustandes der Batterie hergeleitet wird, und bei dem die Arbeit des Generators gesteuert wird, um die Batterieladespannung auf den Bezugswert einzustellen, dadurch gekennzeichnet, dass die Temperatur des Elektrolyten in der Batterie, die Wichte des Elektrolyten und die elektrische Last an der Batterie aufgenommen werden und der Bezugsspannungswert entsprechend einer Zunahme in der aufgenommenen Last und Abnahmen in der aufgenommenen Temperatur und der aufgenommenen Wichte erhöht wird.

2. Verfahren nach Anspruch 1, dadurch gekennzeichnet, dass ein Alarm ausgelöst wird, wenn der Generator nicht arbeitet.

3. Verfahren nach einem der Ansprüche 1 oder 2, dadurch gekennzeichnet, dass der Bezugswert durch einen Computer auf die aufgenommene Temperatur, die Wichte und die elektrische Last ansprechend von einem Grundwert hergeleitet wird, der aus einem Bereich von Werten gewählt wird, die im Computer gespeichert sind.

4. Verfahren nach einem der Ansprüche 1 bis 3, dadurch gekennzeichnet, dass der Bezugswert durch den Computer auf die aufgenommene Temperatur, Wichte und elektrische Last ansprechend berechnet wird.

5. Vorrichtung zum Laden einer Fahrzeugbatterie mit einem Spannungsgenerator, der mit der Batterie verbunden ist, einer Detektoreinrichtung zum Erzeugen eines Signals, das den Betriebszustand der Batterie wiedergibt, und einer Einrichtung zum Herleiten eines Bezugsspannungswertes, der eine bestimmte Funktion der aufgenommenen Batteriebetriebsparameter ist, und zum Steuern der Arbeit des Generators, um die Battrieladespannung auf den Bezugswert einzustellen, dadurch gekennzeichnet, dass die Detektoreinruchtung Signale erzeugt, die die Temperatur des Elektrolyten in der Batterie, die Wichte des Elektrolyten und die elektrische Last an der Batterie wiedergeben, wobei die Bezugsspannung entsprechend einer Zunahme in der aufgenommenen Last und einer Abnahme in der aufgenommenen Temperatur und der aufgenommenen Wichte erhöht wird.

6. Vorrichtung nach Anspruch 5, dadurch gekennzeichnet, dass die herleitende und steuernde Einrichtung einen Computer umfasst, der so programmiert ist, dass er den Bezugswert auf die aufgenommene Temperatur, Wichte und elektrische Last ansprechend berechnet, um den Bezugswert mit der Batterieladespannung zu vergleichen und die Batterieladespannung entsprechend einzustellen.

7. Vorrichtung nach Anspruch 6 oder 7, dadurch gekennzeichnet, dass der Computer so eingerichtet ist, dass er einen Alarm auslöst, wenn der Generator nicht arbeitet.

8. Vorrichtung zum Steuern einer Fahrzeugwechselstrommaschine, die dazu dient, eine Fahrzeugbatterie aufzuladen und eine Feldwicklung, Ankerwicklungen in Sternschaltung zum Erzeugen einer Wechselspannung entsprechend der Erregung der Feldwicklung und eine Gleichrichterschaltung zum Gleichrichten der Wechselspannung aufweist, um eine Ladegleichspannung zu erzeugen, gekennzeichnet durch eine Einrichtung zum Aufnehmen der Energieversorgungsverhältnisse von der Fahrzeugbatterie zu elektrischen Lasten des Fahrzeuges einschliesslich den Scheinwerfern des Fahrzeuges, eine Einrichtung zum Aufnehmen der Temperatur der Batterie, eine Einrichtung zum Aufnehmen der Wichte des Elektrolyten der Batterie, eine Einrichtung zum Bilden eines gewünschten Wertes der Ladespannung entsprechend den aufgenommenen Energieversorgungsverhältnissen, der aufgenommenen Temperatur und der aufgenommenen Wichte, wobei der gewünschte Werte entsprechend einer Zunahme in den aufgenommenen Energieversorgungsverhältnissen und einer Abnahme in der aufgenommenen Temperatur und in der aufgenommenen Wichte erhöht wird, eine Einrichtung zum Aufnehmen des tatsächlichen Wertes der Ladespannung, die an der Fahrzeugbatterie liegt, eine Einrichtung zum Aufnehmen der Spannung des Sternpunktes der Ankerwicklungen in Sternschaltung, eine Einrichtung zum Vergleichen der aufgenommenen Spannung des Sternpunktes mit einem bestimmten Bezugswert, eine Einrichtung zum Erregen der Feldwicklung der Fahrzeugwechselstrommaschine mit einer festen Frequenz, wenn das Ausgangssignal der Vergleichseinrichtung anzeigt, dass die aufgenommene Spannung des Sternpunktes kleiner als der bestimmte Bezugswert ist, und eine Einrichtung zum Erregen der Feldwicklung der Fahrzeugwechselstrommaschine solange wie der tatsächliche Wert der Ladespannung kleiner als der gewünschte Wert der Ladespannung ist, wenn das Ausgangssignal der Vergleichseinrichtung anzeigt, dass die aufgenommene Spannung des Sternpunktes grösser als der bestimmte Bezugswert ist.

**Revendications**

1. Procédé de charge d'une batterie de véhicule, dans lequel la tension réelle de charge produite par un générateur relié de manière à charger la batterie est détectée et comparée à une valeur de tension de référence obtenue comme étant une fonction prédéterminée de l'état de fonctionnement de la batterie, et le fonctionnement du générateur est commandé de manière à ajuster la tension de charge de la batterie à ladite valeur de référence, caractérisé en ce que la température de l'électrolyte de la batterie, la densité de l'électrolyte et la charge électrique imposée à la batterie sont détectées, la valeur de la tension de référence étant augmentée en conformité avec une augmentation de la charge détectée des circuits et une diminution de la température détectée et de la densité spécifique détectée.

2. Procédé selon la revendication 1, caractérisé en ce qu'une alarme est actionnée lorsque le générateur ne fonctionne pas.

3. Procédé selon l'une quelconque des revendications 1 ou 2, caractérisé en ce que la valeur de référence est obtenue par un ordinateur à partir d'une valeur de base choisie dans une plage de valeurs stockées dans l'ordinateur, en réponse à la température, à la densité et la charge électrique détectées.

4. Procédé selon l'une quelconque des revendications 1 à 3, caractérisé en ce que la valeur de référence est calculée au moyen d'un ordinateur en réponse à la température, à la densité et à la charge électrique détectées.

5. Appareil de charge d'une batterie de véhicule, comprenant un générateur de tension relié à la batterie, un moyen de détecteur pour produire un signal représentatif de l'état de fonctionnement de la batterie, et un moyen pour obtenir une valeur de tension de référence qui est une fonction prédéterminée du paramètre de fonctionnement détecté de la batterie, et pour commander le fonctionnement du générateur afin d'ajuster la tension de charge de la batterie à la tension de référence, caractérisé en ce que le moyen de détecteur produit des signaux représentatifs de la température de l'électrolyte de la batterie, de la densité de l'électrolyte et de la charge électrique imposée à la batterie, la tension de référence étant augmentée en conformité avec une augmentation de la charge détectée et avec une diminution de la température détectée et de la densite détectée.

6. Appareil selon la revendication 5, caractérisé en ce que le moyen d'obtention d'une valeur de tension de référence et de commande comprend un ordinateur qui est programmé de manière à calculer la valeur de référence en réponse à la température, à la densité et à la charge électrique détectées, dans le but de comparer la valeur de référence à la tension de charge de la batterie et à ajuster en conséquence la tension de charge de la batterie.

7. Appareil selon la revendication 6 ou la revendication 7, caractérisé en ce que l'ordinateur est agencé de manière à actionner une alarme lorsque le générateur ne fonctionne pas.

8. Appareil de commande d'un alternateur de véhicule utilisé pour la charge d'une batterie de véhicule et comportant un enroulement inducteur, des enroulements d'induit connectés en étoile pour produire une tension alternative en conformité avec l'excitation de l'enroulement inducteur et un circuit redresseur pour redresser la tension alternative afin de produire une tension de charge en courant continu, caractérisé par:

— un moyen pour détecter un état d'alimentation entre la batterie du véhicule et des charges électriques du véhicule comprenant les phares;

— un moyen pour détecter la température de la batterie;

— un moyen pour détecter la densité de l'électrolyte de la batterie;

— un moyen pour établir une valeur désirée de la tension de charge en conformité avec l'état d'alimentation détecté, la température détectée et la densité détectée, la valeur désirée étant augmentée en conformité avec une augmentation de l'état d'alimentation détecté et avec une diminution de la température détectée et de la densité détectée;

— un moyen pour detecter une valeur réelle de la tension de charge appliquée à la batterie du véhicule;

— un moyen pour détecter une tension du point neutre des enroulements d'induit connectés en étoile;

— un moyen pour comparer la tension détectée du point neutre à une valeur de référence prédéterminée;

— un moyen pour exciter l'enroulement inducteur de l'alternateur du véhicule à une fréquence fixe lorsque la sortie du moyen de comparaison indique que la tension détectée du point neutre est inférieure à la valeur de référence prédéterminée; et

— un moyen pour exciter l'enroulement inducteur de l'alternateur du véhicule tant que la valeur réelle de la tension de charge est inférieure à la valeur désirée de cette tension de charge lorsque la sortie du moyen de comparaison indique que la tension détectée du point neutre est supérieure à la valeur de référence prédéterminée.

0010449

FIG.1.

ALARM ─10

LOAD CONDITION SENSOR ─5

SPECIFIC GRAVITY SENSOR ─6

TEMPERATURE SENSOR ─7

FIRST VOLTAGE SENSOR ─8

A/D CONVERTER ─22

MICRO COMPUTER ─20

─21

BATTERY ─2

SECOND VOLTAGE SENSOR ─9

$l_2$

$l_1$

DRIVING CIRCUIT ─14

11    13    12    1

A

3    31

45    46    47    48    4

1ST    2ND    3RD    4TH

41    42  LOADS  43    44

# FIG.2.

START —101

102 —

INPUT SIGNALS
T: TEMPERATURE
S: SPECIFIC GRAVITY
$V_N$: N.POINT VOLTAGE
$V_X$: BATTERY VOLTAGE
SWI: LOAD CONDITION
SW2: —·—·—·—·—
$V_Y$ GENERATOR VOLTAGE

IS $V_N$ GENERATED?

103 —

YES

106 —

$V(T,S)=K_1T+K_2K_3S$

104 — NO

NO GENERATION INDICATED

105 —

INITIAL FIELD EXCITATION

107 —

IS SWI ON?

NO

108 —

IS SW2 ON?

NO

YES

110 —

$V_1(T,S,L)=V(T,S)+L_1$

YES

112 —

$V_2(T,S,L)=V(TS)+L_2$

111 —

$V_X>V_1(T,S,L)$

NO

YES

113 —

$V_X>V_2 \ (T,S,L)$

YES

109 —

$V_X > V(T,S)$

YES

NO

NO

114 —

NO FIELD EXCITATION

115 —

FIELD EXCITATION

116 —

NO

$V_Y >V_0$

YES

117 —

OVER VOLTAGE INDICATION

END — 119

2

# FIG. 3.

0010449

# FIG.4.

# FIG.5.

4